# EUROPEAN PATENT SPECIFICATION

(11) **EP 0 346 517 B1**
(45) Date of publication and mention of the grant of the patent: **26.01.1994**
(21) Application number: 88109628.3
(22) Date of filing: 16.06.1988
(51) Int. Cl.: G06F 15/72, G06F 15/60

(54) **Method for generating graphical models**
Verfahren zur Erzeugung von graphischen Modellen
Méthode pour générer des modèles graphiques

(43) Date of publication of application: 20.12.1989
(73) Proprietor: ROLLER, Dieter, Prof.Dr., D-71101 Schönaich (DE)
(72) Inventor: ROLLER, Dieter, Prof.Dr., D-71101 Schönaich (DE)
(74) Representative: Otte, Peter, Dipl.-Ing.

(56) References cited:
- EP-A- 0 218 246
- COMPUTER-AIDED DESIGN, vol. 14, no. 1, January 1982, pages 209-214, Butterworth & Co. (Publishers) Ltd, GB; R. LIGHT et al.: "Modification of geometric models through variational geometry"
- N.E.C. RESEARCH AND DEVELOPMENT, no. 72, January 1984, pages 23-32, Tokyo, JP; K. KAWAGOE et al.: "Parametric object model: A geometric data model for computer-aided-engineering"
- COMPUTER-AIDED DESIGN, vol. 11, no. 5, September 1979, pages 253-272, IPC Business Press Ltd, GB; A. BAER et al.: "Geometric modelling: a survey"

## Description

This invention relates to a method for generating graphical models of 2- or 3-dimensional objects with at least partially variable dimensions, in particular mechanical parts, in a computer aided design system comprising a set of design commands offered to the user for selection and preferably represented by command keys, said computer aided design system being designed for automatic detection of implicit geometric restrictions.

A computer aided design system is used to build graphical models and graphical drawings of mechanical parts in an interactive mode, i.e. to enter a geometry and its dimensions by well-known input means such as keyboards, graphic tablets, mouses etc., to show these parts on a high resolution CRT and finally to plot them. A common technique is to enter fix values for the dimensions of a mechanical part to be drawn. Still this technique has the disadvantage that it is rather uncomfortable to alter the dimensions in a later stage of the design process.

One has therefore already tried to build CAD-Systems which allow to enter variable dimensions, i.e to enter a symbolic value or label for certain dimensions during the design process and to replace it - in a second step - by an actual dimension in order to create the actual part. For the purpose of this invention, the first step will be called "object entry mode" and the second step "retrieval mode".

CAD-systems which allow the input of symbolic dimensions are particularly important for the creation of part families, i.e of parts with principally the same shape, but differring dimensions. They are further used for the design of parts the dimensions of which are not yet finally defined.

The present invention relates to a CAD-System of this type, i.e a system which allows to alter the dimensions of a computer model in a later stage of the design process and to generate automatically an object with those altered dimensions. In the context of this description, "variable dimension" shall mean a symbolic dimension which is to be replaced by an actual dimension in retrieval mode as well as an actual dimension, e.g. in millimeters or inches, which is to be replaced by another actual dimension later on.

Such a CAD-System suited to handle variable dimensions must be able to store information about the edited object in object entry mode; this stored information is then used for retrieval with altered dimensions. A serious problem in this process is to guarantee the completeness of the generated drawing in retrieval mode, i.e. with altered dimensions. The reason for this problem is that all technical drawings contain so-called "implicit restrictions", i.e. information about the geometrical shape of an object which is not explicitely described and entered into the system, but self-evident for the experienced mechanical engineer or draftsman. A typical example for such an implicit restriction is a right angle between two lines. Although an experienced user will immediately recognize a right angle and distinguish it from a case where two lines are accidentally orthogonal, these cases cannot be handled easily by a computer system due to lacking information about the relation between the two lines.

The ideal CAD-System able to handle variable dimensions should further check the completeness of all dimensions and restrictions and give an indication to the user about the lacking information if it should turn out to be incomplete. It should further check the dimensions and restrictions for inconsistencies and redundancies in determination and generate appropriate error messages. Last not least, the system should allow interactive work, i.e. the response times should be in the range of several seconds.

There have already been several attempts to meet these - partially conflicting - demands. The following is a short description of prior art CAD-Systems with variable dimensioning capability:

### 1. Method of variant programming

According to this method, the user has to design a program in a high-level programming language (for example, a so-called CAD macro language). This program requests - upon call - the parameters and then generates a corresponding drawing or a geometrical model.

The major disadvantage of this solution is that the user must have detailed knowledge of and experience with programming languages. As this is regularly not the case for a draftsman or a mechanical engineer, this method has a restricted area of use.

### 2. Interactive variant design with sequential calculation of the geometrical points of a variant

According to this method, the user generates an unscaled model with variable dimensions in interactive mode. Subsequently, the variable dimensions are replaced by actual values, and the system generates the geometry according to the actual dimensions.

Due to the symbolic dimensions, the system must be able to recognize the additional restrictions like "right angle" or "horizontal line". These implicit restrictions are detected by the system during the first design step, i.e. the generation of the unscaled model. The user works in an environment of "capture lines" in predefined coordinate systems; whenever an actual line is "captured" between two capture lines, the system denotes that as a restriction. For example, the system will record any angle between 89° and 91° as "right angle", i.e. a restriction.

When the unscaled model has been entered in the first step and all symbolic dimensions and restrictions were recorded, the symbolic dimensions are replaced by actual values in a second step. The system then calculates the geometrical points and positions of the actual model on the basis of the actual dimensions and the restrictions. This calculation is performed by - beginning with a start point - successively calculating the coordinates of the next point using the actual dimensions and the restrictions. The calculation of the actual model ("actualization") is successful if the created model meets all explicit restrictions (dimensions) and implicit restrictions.

This system as for example described in "HP-DESIGN, HP 98355A, Technical Description November 1984", still has several disadvantages. These are:
a) Calculation of a new geometry in step 2 (with actual dimensions) is very time-consuming. The reason is that, for calculating the "way" from one geometrical point to another, a multiplicity of possibilities has to be checked.
   The consequence is that calculation of a new geometry needs - depending on the complexity of the case - approximately five minutes. In the light of response times of several minutes, no interactive design is possible.
b) Successful calculation of a new geometry is only possible if all dimensions are completely "actualized", i.e. all variable dimensions are replaced by actual values. It is rather difficult for the user to ensure this completeness, in particular as the number of necessary dimensions also depends on implicit restrictions.
c) In case the system detects incomplete or inconsistent dimensions, it cannot generate precise error messages, i.e. it can only generate a message like "dimension missing", but in this case, the user has no indication which geometrical item should be dimensioned.
d) The automatic detection of implicit restrictions may fail. For example, this may be the case if two lines are accidentally orthogonal or colinear in the unscaled model although this is no binding restriction and can be replaced by another geometrical configuration in the actual model. Such unwanted restrictions cause a lot of confusion and are difficult to remove from the system.

### 3. Interactive variant design with simultaneous calculation of the geometrical points

According to this system, the actual dimensions as well as the implicit restrictions are transformed into a system of equations. The variables in this system of equations are the coordinates of the geometrical points. For example, n geometrical points lead to 2n variables in the case of a 2-dimensional geometry.

The resulting system of equations is regularly non-linear. To calculate the geometrical points, this system has to be solved, usually using a numerical procedure. It has turned out that even relatively simple mechanical parts result in a system of several hundreds of equations with the corresponding number of variables.

This system also requires recognition of the implicit restrictions during the first design step. These restrictions are - as well as in the previous case - to be detected by automatic interpretation. See for this method "Light, R., Gossard, D.: Modification of geometric models through variational geometry, Computer Aided Design, Volume 14, number July 4, 1982, by: Butterworth & Co. Ltd.". As the recognition of implicit restrictions is performed in a similar way as in the previous example, the disadvantages are the same, in particular the difficult check of completeness and the generation of unwanted implicit restrictions.

In order to determine the completeness and uniqueness of dimensions and restrictions prior to the calculation, a complex theoretical method was developed (see Chyz, G., W.: Constraint Management for Constructive Geometry, Master Thesis, Department of Mechanical Engineering, MIT, 1985). Still it has turned out that this method cannot ensure a complete check.

This system has, in general, the following disadvantages:
a) The solution of the system of non-linear equations requires a lot of time (between minutes and hours). Therefore, it cannot be operated in interactive mode.
b) In case of inconsistent dimensioning, the system of equations cannot be solved, i.e. the point coordinates of a variant cannot be determined. The missing dimension or restriction which caused the error cannot be determined precisely in this case, i.e. the user receives simply an error message, but no excact indication on the reason of this error.
   Further, the system of equations may be unsolvable due to numerical problems (e.g. a determinant which equals zero) although the problem as such is solvable.
c) The necessary time for a calculation and its convergence depends on the actual dimensions. Therefore, the proportions of the basic model determine the calculation of a variant.
d) With regards to the detection of unwanted implicit restrictions, the problems are the same as in the previous case.

It is therefore a major object of the present invention to provide a method for generating graphical models of the type described above which ensures the reliable detection and completeness of the implicit restrictions. Further objectives are a short calculation time for a variant (i.e. an actual model wherein all variable dimensions are replaced by actual dimensions) thus enabling an interactive mode, and, in case of an error caused by incomplete dimensioning, a "qualified" error message with an indication on the type of missing dimension for the user.

According to one aspect of the present invention, this problem is solved by a method of the type described above in that a computer aided design system
in an object entry mode,
reads a predefined implicit geometric restriction from a command-to-restriction table if a command of a predefined sub-group of said set of design commands is entered by the user, said design commands of said predefined sub-group being assigned to implicit geometric restrictions,
stores said predefined implicit geometric restriction or a representation of the same for further processing,
in a retrieval mode wherein said variable dimensions are replaced by actual values,
retrieves said implicit geometric restrictions and incorporates them in the graphical model of an actual object.

The computer aided design system therefore comprises two basic operating modes. In the first mode, the object entry mode, the user may enter the graphical model of 2- or 3-dimensional object at least partially using variable or symbolic dimensions. Preferably, dimensions may be entered either as actual dimensions, i.e. in millimeters, inches etc., or in symbolic dimensions, for example "L₁". Usually, command input is performed using the "keys" of a graphics tablet by touching predefined labels on that tablet with a pen; alternatively, an alpha-numeric keyboard may be used to enter the commands, either as text or using softkeys, or a specific CAD keyboard may be used. Further, inputs may be performed using the graphic area of a graphics tablet, e.g. to draw curves which cannot be described by a mathematical expression.

During the object entry process, several keys or design commands are used which refer to an implicit restriction. The most important restrictions of this type are:
1. Horizontal Line, i.e. a line parallel to the horizontal edge of the graphics tablet or of the CRT on which the created model is displayed,
2. Vertical Line, i.e. a line which is parallel to a vertical edge of the graphics tablet or the screen,
3. Parallel Line, i.e. a line which is parallel to another one, this other one being already defined,
4. Orthogonal Line, i.e a right angle between two lines,
5. Tangential Line, i.e. a line which is tangential to a circle already defined,
6. Colinear Line, i.e. a line which is in alignment with the extension of another already defined line,
7. Concentric Circle, i.e. a circle the center of which corresponds with the center of another, already defined circle,
8. Tangential Circle, i.e. a circle tangential to another circle which is already defined.

The present invention particularly uses the fact that certain keys or design commands relate to an implicit restriction of this type. In particular, according to the described method, the computer aided design system assigns the implicit geometric restriction to the corresponding key or command and stores this restriction or a representation of the same if one of these design commands is entered or if one of these keys is pressed. Storing the restriction directly makes it easy to retrieve it when entering retrieval mode where the variable or symbolic dimensions are replaced by actual values to build the graphical model of a variant (an actual object). Furthermore, using such restrictions containing geometry commands needs no extra inputs for the specification of implicit restrictions.

This method ensures that
a) all relevant restrictions are reliably detected and that
b) no unwanted restrictions are created.

Of course, the system user has to take care that he uses the design commands or keys related to a restriction only in those cases where an actual restriction is intended. That is, for example, the command "horizontal line" may only be entered if a line is indeed intended to be horizontal in all cases, i.e. if the line is horizontal in all possible variants. On the other hand, if a line is only horizontal in a specific drawing by accident, i.e. may be inclined with respect to the horizontal edges of the graphics tablet or the screen in certain variants, another design command which is not related to a restriction has to be used, e.g. "line from point to point". Thus, the system uses redundant information already known to the user for reliable detection of implicit restrictions.

In contrast to prior art systems, no algorithm is necessary to "capture" a restriction. A further advantage is that, in a lot of common systems, commands or keys implying a restriction are already implemented and that the users are already familiar with them. The main difference of the present system to prior art systems is that these systems did not utilize the restriction implied by a certain key or design command, but instead implemented a separate algorithm to detect these restrictions.

In order to utilize the additional information on an implicit restriction provided by a certain design command or a certain key, this restriction must be saved, i.e. stored, for further processing. The present computer aided design system operates in this manner. It further distinguishes between design commands or keys with implied restriction and design commands or keys which do not provide information about a certain restriction. This distinction can be made easily as it is already known.

Storing of a detected implicit geometric restriction may be performed in several ways. For example, a code indicating this restriction may be stored. Alternatively, it is possible to store the command or key which implies a restriction directly, e.g. as a code, and eventually together with dimensioning information. Additional information like an indication of symbolic dimensions may also be stored.

Therefore, the invention further relates to a method for generating graphical models of 2- or 3-dimensional objects with at least partially variable dimensions, in particular mechanical parts, in a computer aided design system comprising a set of design commands offered to the user for selection and preferably represented by command keys, wherein said computer aided design system is designed for automatic detection of implicit geometric restrictions and
in an object entry mode,
stores a command, e.g. as a code, for further processing if entered by the user, if said design command is a command of a predefined subgroup of said set of design commands, the design commands of said predefined sub-group being assigned to implicit geometric restrictions,
in a retrieval mode wherein said variable dimensions are replaced by actual values,
retrieves said design command, assigns a predefined implicit geometric restriction to it via a command-to-restriction table and incorporates said implicit geometric restriction in the graphical model of an actual object.

In retrieval mode, i.e. in the mode which is used to generate a variant (actual object), all variable dimensions are replaced by actual dimensions, and a combination with the dimensions already defined as actual in object entry mode and the stored restrictions allows to build the variant. This variant can be calculated by the system very easy.

The described methods particularly ensure that all implicit geometric restrictions are completely recognized and that no unwanted, i.e. erroneous restrictions are created. The system can further generate specific error messages if a dimension or restriction is missing; that is, the user receives information on the geometrical item which needs further definition. This is performed in retrieval mode, i.e. when a variant (actual object) is realized.

The invention further relates to a computer aided design system comprising at least one user input interface, one user output interface and a digital processor which is connected with said interfaces, preferably via appropriate registers, and which is further connected with a program memory containing instructions to operate said digital processor. The user input interface is preferably a keyboard, a graphic tablet and/or a mouse, whereas the user output interface is preferably a screen with graphics capabilities and/or a plotter.

In such a computer aided design system which is set up for automatic detection of implicit geometric restrictions, the user input interface comprises a set of design command entry means which include at least two sub-groups, wherein each design command in the first of these sub-groups is assigned to a predefined implicit geometric restriction via a command-to-restriction table, and a second sub-group the commands thereof is not being assigned to an implicit restriction. The command entry means may be the keys of the graphics tablet, the keys of a keyboard or something similar.

The program memory contains instructions to store the assigned implicit geometric restriction or a representation of the same (e.g., a keycode) for further processing if a design command of the first sub-group is entered, and it further contains instructions to retrieve the implicit geometric restrictions and incorporate them into the graphical model of a variant (actual object).

The program memory therefore contains the necessary instructions for the digital processor to perform the method as described above. All explanations and advantages of this method do also apply to the computer aided design system with a program memory containing the appropriate instructions.

Advantageously, the computer aided design system further comprises a data memory which contains, as a representation of each design command, at least
- a representation of that command and/or its operation, this representation preferably also being representative of an implicit geometric restriction eventually associated with that command, and
- the dimension of the associated geometrical item, preferably as a fixed dimension or as a variable or symbolic dimension.

Such a list is particularly helpful for the generation of a variant in retrieval mode. The interpretation of a command, that is the decision whether a command is representative of an implicit restriction and of which restriction, may be either performed immediately after entry of that command, i.e. in object entry mode, or upon the generation of a variant, i.e. in retrieval mode.

According to a further aspect of the inventive method described herein, the computer aided design system
- in object entry mode, records the sequence of design commands as entered by user; and
- in retrieval mode, retrieves said sequence of design commands and incorporates them into the graphical model of the variant (actual object) in successive steps following said sequence.

According to this method, the variant is generated in the same order of steps as performed by the user. In comparison with the interactive variant design method with sequential calculation of the geometrical points (prior art as described under item 2), the new method saves considerable time as it is not necessary to test each way from one point to another. This considerable reduction of time results in response times of seconds and therefore implements a real interactive mode. This method is particularly advantageous if all restrictions and dimensions (whether fix or variable) are recorded, too, as a variant or even a multiplicity of variants may be generated within very short time. Still it has to be pointed out that the method of recording the sequence of design commands as entered by the user may also be performed independently of the method to save the restrictions as short response times may also be obtained by merely recording the sequence of design commands.

Recording the sequence of design commands as entered by the user may be performed in various ways. For example, the design commands may be simply stored in the same order as entered by the user. Alternatively, it is also possible to assign an index number to any design command, these indices indicating their input order. Those index numbers are assigned to the design commands in consecutive order. Storing of the design commands may then be performed in an arbitrary order or according to another classification scheme as their input order may be reconstructed by means of their index numbers. The described method may be implemented in the program memory of a computer aided design system.

According to a further perferred embodiment of the present invention, a user may enter the value of a geometrical dimension in object entry mode either as
- a fixed dimension which cannot be altered thereafter or
- a variable dimension which is then assigned an actual value in retrieval mode.

This feature is particularly helpful if a family of parts is to be generated; all dimensions which are common to this part family are then assigned a fixed dimension, whereas a variable dimension is assigned to all items which are variable throughout this family of parts. Common systems do not use variable or symbolic dimensioning in the same interactive environment, i.e. the same process or subprogram.

Advantageously, the user has further the choice to enter the value of a geometrical dimension as a flexible dimension which is defined by two already defined geometrical positions (points, arcs etc.). A flexible dimension is a dimension which is not to be replaced by an actual value in retrieval mode. Instead, it refers to two already defined geometrical positions and therefore frees the user from entering the coordinates of already known positions repeatedly. This makes the use of the system more pleasant and more efficient.

The invention relates to the method of entering various types of dimensions as well as to a computer aided design system with a program memory containing the instructions to perform that method.

The accompanying drawings depict preferred embodiments of the present invention. In particular, further features and advantages of the invention may be apparent in this detailed description.

In the drawings,
Fig. 1 depicts the problem of complete dimensions for a mechanical part,
Fig. 2 shows the problems arising in automatic systems for the detection of implicit restrictions,
Fig. 3 shows a further problem which occurs when redundant dimensions are entered,
Figs. 4a to 4f depict examples of implicit restrictions,
Fig. 5 depicts an overall diagram of a typical computer aided design system embodying the invention,
Fig. 6 depicts a flowchart of the input sequence (object entry mode),
Fig. 7 is a flowchart of the dimensioning process,
Fig. 8 depicts a typical example of a list of items stored in object entry mode,
Fig. 9 is a flowchart of the retrieval process,
Figs. 10a and 10b depict the operation of a CAD-System according to the invention by means of a simple mechanical part and
Figs. 11a to 11c depict the display of input errors (dimensioning or design errors).

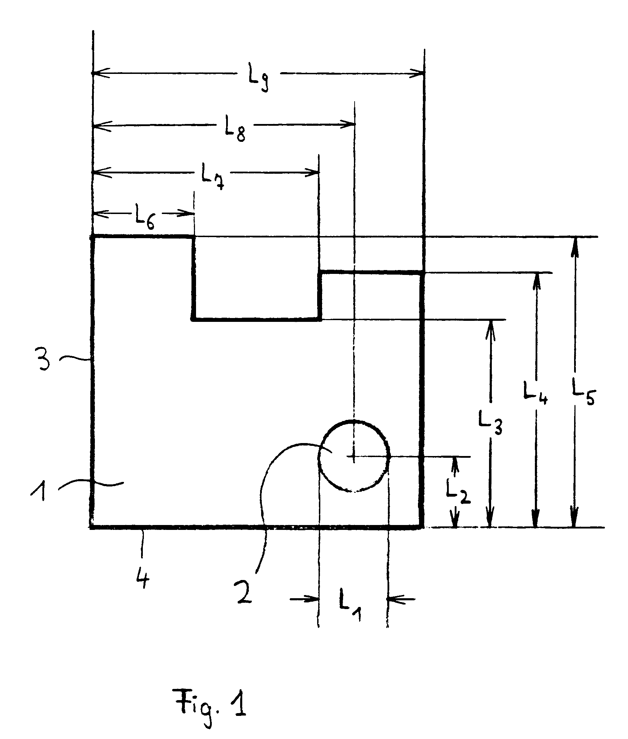

Fig. 1 depicts the typical problems when dimensioning a mechanical part in a computer aided design system. Part 1 is defined by at least 9 dimensions L₁ to L₉. Still this information is not sufficient for an automated system to create the drawing shown in Fig. 1. A shape of the part comprises further so-called "implicit restrictions", i.e. restrictions which are evident to the experienced user but not to the system. These restrictions are the parallelism of several lines or, alternatively, their horizontal or vertical position; one may also use right angles between several of them instead. Further, the symmetry of hole 2 is an implicit restriction.

In the case of lines 3 and 4, their mutual relation may be defined either by the horizontal position of line 4 and the vertical position of line 3 or by the right angle (orthogonality) between them.

If any of dimensions L₁ to L₉ or any of the implicit restrictions is missing, the computer aided design system is not able to create a representation of part 1. On the other hand, an additional (unnecessary) dimension may also cause confusion. This is particularly important for systems which allow the creation of part families or the replacement of dimensions as will be described hereinafter.

In prior art CAD-Systems which allow interactive constructions with variable or replacable dimensions, restrictions are detected by appropriate algorithms. A restriction is, for example, detected if an angle between two lines is between 89° and 91°. Basically the detection is performed by comparison of point coordinates. (Manual input of constraints/restrictions in a second design process - after the geometry design - is also possible, but still unacceptable as this implies that the user has to reconsider the whole construction). The automated detection of restrictions may lead to errors if a "restriction" occurs merely in a certain drawing, but is not mandatory for other variants.

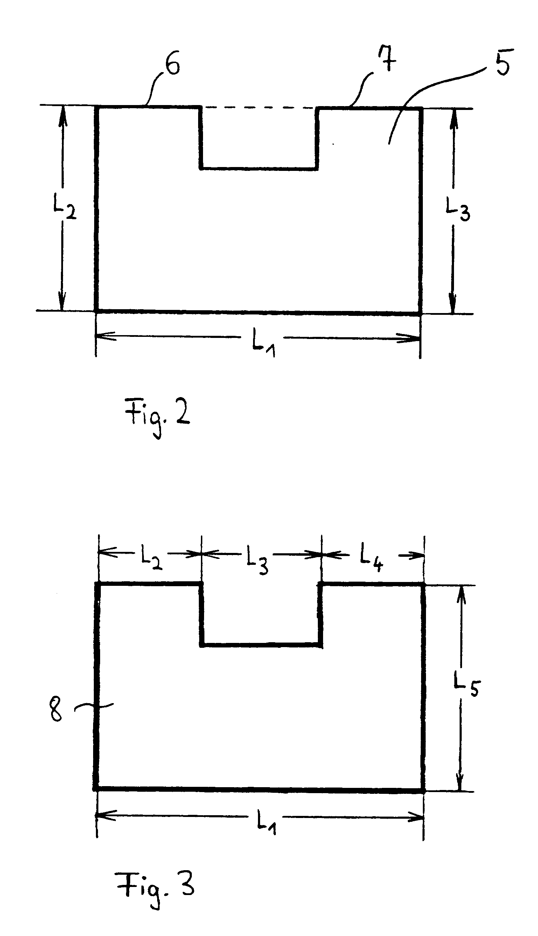

Fig. 2 depicts a typical example of such an "erroneous restriction" which may lead to a error message afterwards. Mechanical part 5 is defined by three dimensions L₁, L₂ and L₃ (the dimensions of the recess on the top of part 5 are not relevant for this consideration). In the shown example, dimensions L₂ and L₃ are accidentially equal. Therefore, an automated algorithm for the detection of restrictions will discover colinearity between lines 6 and 7. Whenever another variant with L₂ not corresponding to L₃ is to be generated thereafter, this will lead to an error message caused by the violation of the colinearity restriction.

Another problem is illustrated in Fig. 3. In this example, one of dimensions L₁ to L₄ is unnecessary. Therefore, if the sum of dimensionsL₂ to L₄ is not equal to dimension L₁, this would result in an error which cannot be located by the system. If, for example, a CAD-System is used which transforms the dimensions and the implicit restrictions to a system of equations, this system cannot be solved due to redundancy in determination, and there is no indication which of the dimensions caused that error. Therefore, the shape of part 8 cannot be calculated.

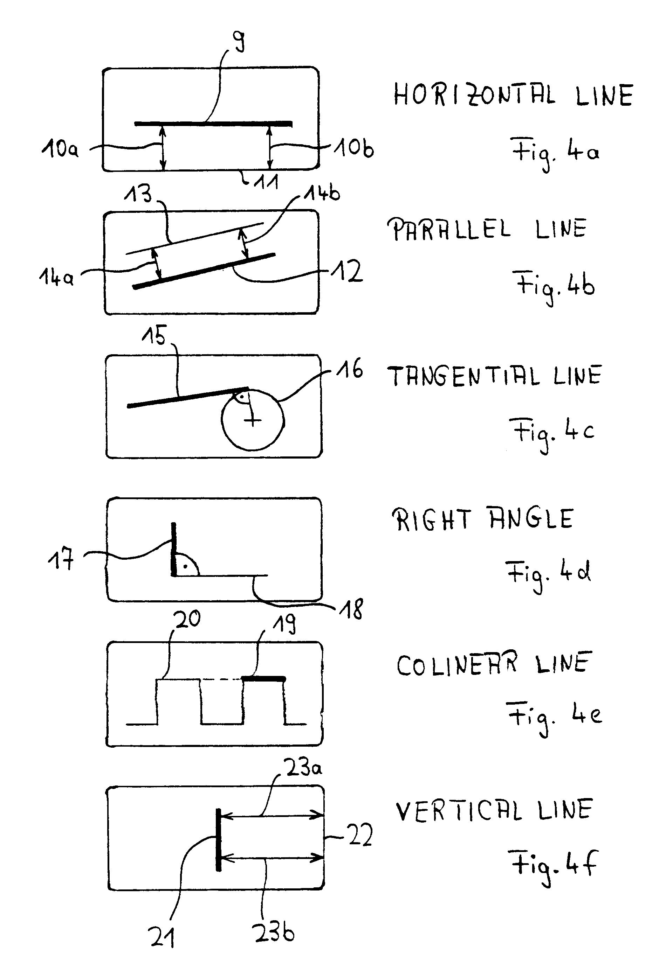

Typical "implicit restrictions" are depicted in Figs. 4a to 4f. Fig. 4a is the "HORIZONTAL LINE" restriction, i.e., line 1 is a horizontal line with constant distance (cf. arrows 10a, 10b) to lower edge 11 of the screen. In similar manner, Fig. 4b depicts the restriction "PARALLEL LINE", i.e., the distance between line 12 and a predefined line 13 is constant (arrows 14a and 14b which are of equal length).

The "TANGENTIAL LINE" restriction as depicted in Fig. 4c indicates that line 15 is a tangent to circle 16 (which may also be an arc). "THE RIGHT ANGLE" restriction between lines 17 and 18 is depicted in Fig. 4d.

In Fig. 4e, line 19 is colinear to predefined line 20, i.e. an extension of this line. This is the "COLINEAR LINE" restriction. Finally, the "VERTICAL LINE" restriction depicted in Fig. 4f is similar to "HORIZONTAL LINE", i.e. line 21 is parallel to vertical edge 22 of the screen (cf. arrows 23a, 23b).

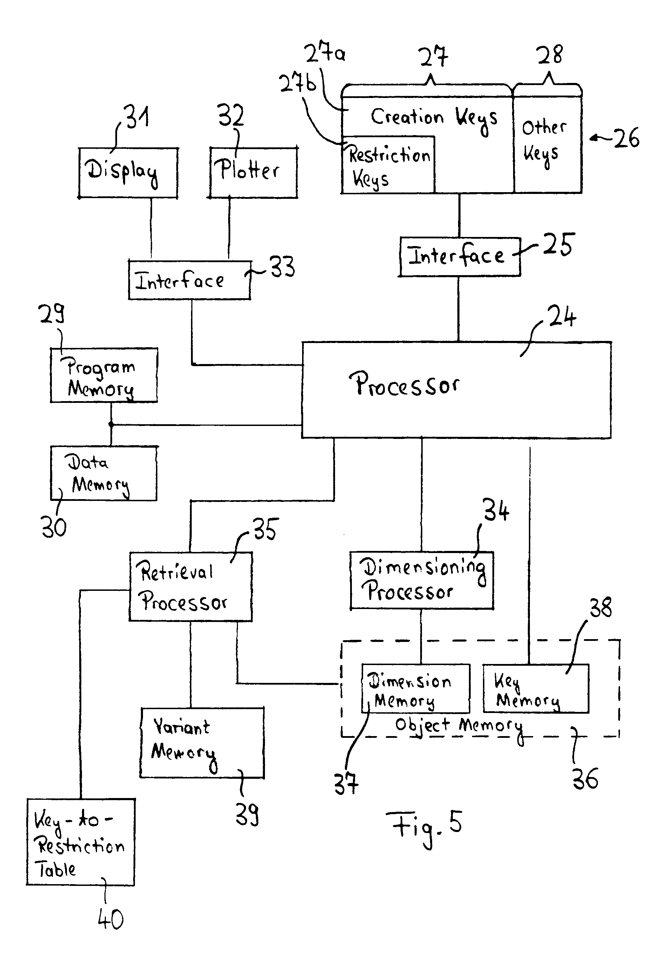

Fig. 5 depicts a simplified schematic diagram of a computer aided design system according to the present invention. It has to be pointed out that this is only a typical configuration of such a system which does not limit the scope of the present invention.

A processor 24 is connected via an appropriate interface 25 with an input device 26 which may be, for example, a keyboard and/or a graphics tablet. For the purpose of this example, it can be assumed that it is a graphics tablet.

This graphics tablet comprises a set of "creation keys" 27 and a set of "other keys" 28. Creation keys 27 are used to enter design commands, i.e. by pressing an appropriate pen on predefined areas of the graphics tablet. Other keys 28 are used for further functions, e.g. HELP, PLOT etc.

The set of "creation keys" 27 is further divided into sub-groups 27a and 27b. Restriction keys 27b are associated with an implicit restriction, for example a restriction as depicted in Figs. 4a to 4f or a further restriction like "concentric circle". The keys of sub-group 28a are not associated with an implicit restriction.

Processor 24 is further connected with a program memory 29 containing the instructions to operate the processor and with a data memory 30. Other peripheral instruments like a display 31 and a plotter 32 are connected with processor 24 via an appropriate interface 33.

Processor 24 is further connected with a dimensioning processor 34. This processor is - as well as retrieval processor 35 - drawn as a separate processor in Fig. 5. This is primarily done for the purpose of clarity; indeed, dimensioning processor 34 and retrieval processor 35 may be realized as a set of instructions or operating codes stored in a program memory, e.g. program memory 29.

Dimensioning processor 34 further cooperates with an object memory 36 which consists of a dimension memory 37 and a key memory 38. Retrieval processor 35 also has access to object memory 36. The retrieval processor further cooperates with a variant memory 39 and a key-to-restriction table 40. Memories 36 and 39 may also be part of data memory 30 although drawn as separate memories in Fig. 5 for the purpose of clarity.

The system depicted in Fig. 5 has two basic operating modes. In the first mode, the so-called object entry mode, the user may enter the basic shape of a mechanical part using creation keys 27. Dimensions may be entered either as fixed, variable or flexible dimensions as will be explained later on. Restrictions as triggered by pressing one of restriction keys 27b will also be recorded.

In a second mode, the so-called retrieval mode, all variable dimensions are replaced by actual values, and an actual object (variant) is generated.

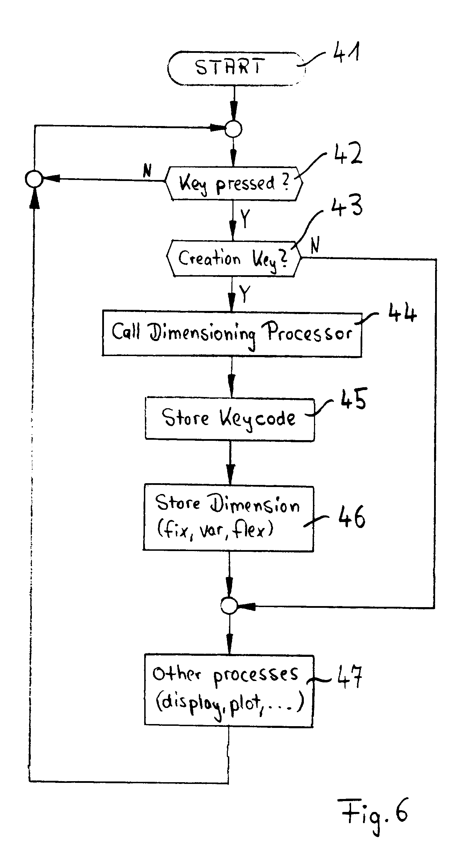

Fig. 6 depicts a flowchart illustrating the first mode, the object entry mode. This flowchart is executed by a processor 24 under control of program memory 29.

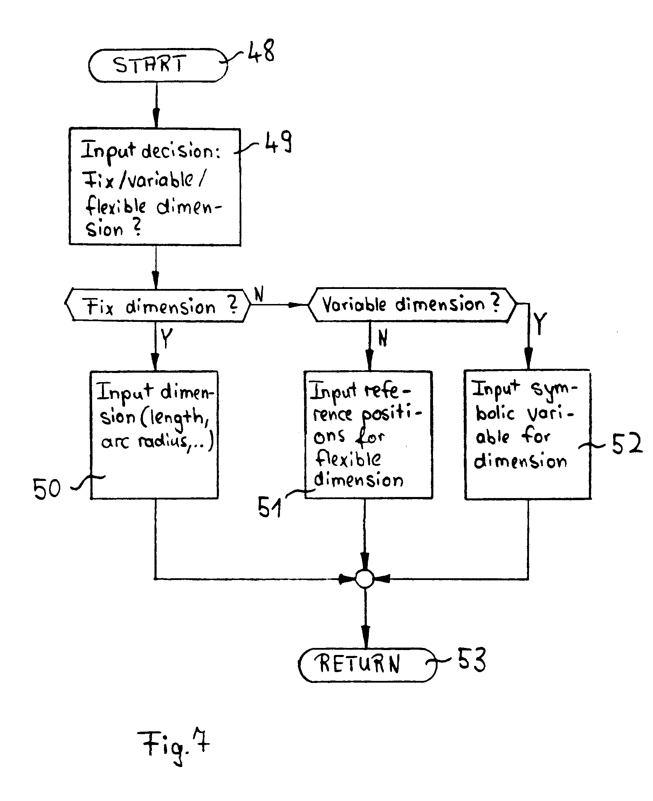

Operation starts at label "START" (41). The system waits for key input (42) and, if a key was pressed and it is a creation key (43), transfers control to the dimensioning processor (44) which will be explained by means of Fig. 7. The code representing the pressed key is then stored (45) as well as one or more dimensions (46) together with an indication whether this dimension is a fixed, variable or flexible dimension.

Eventual further processes are then performed, if necessary (47) - this is also the case if the pressed key was no creation key - , and the system waits for the next key input.

Operation of the dimensioning processor 44 will now be explained by means of Fig. 7. After entering at label "START" 48, the system asks the user whether the dimension of the geometric element to be entered will be a fix, variable or a flexible dimension (49). If it is a fixed dimension, the user is asked for the value of this dimension, e.g. length, arc radius etc. (50). If the dimension is a flexible dimension, the user is asked for the necessary reference positions or points (51). If the dimension is a variable dimension, the user has to enter a symbol therefor (52) or, alternatively, to use an automatically generated default symbol.

Control then returns to the dimensioning processor as explained by means of Fig. 6 ("RETURN" 53 in Fig. 7).

If necessary, the dimensioning processor may also be called several times if a command needs more than one dimension (e.g., a command to draw a circle which requires the coordinates of the origin as well as the radius of the circle).

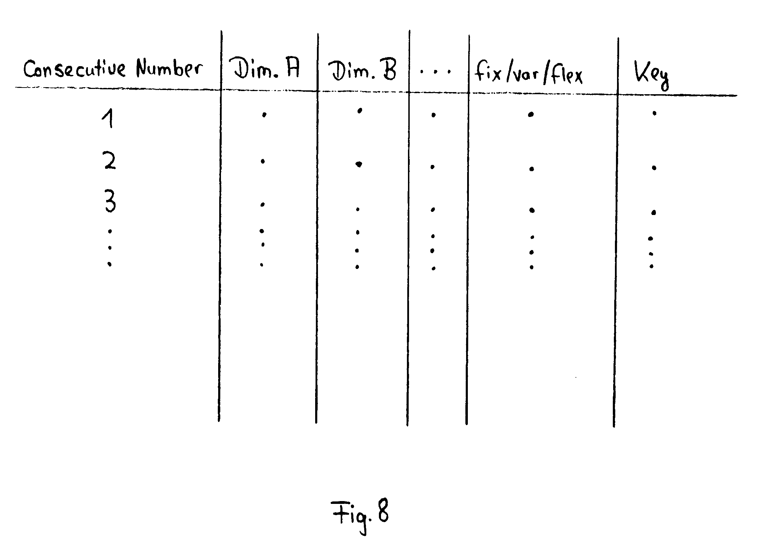

Fig. 8 depicts a typical example of a list of items as entered in object entry mode and stored in object memory 36, i.e. in dimension memory 37 and in key memory 38, respectively. In the first column, a consecutive number is entered indicating the input order of a specific command. The second and third column contain the associated dimensions, the forth column further dimensions, if necessary. If the selected dimension was a fixed dimension, these columns contain actual values; if the selected dimension was a variable one, they contain symbolic dimensions, and if the selected dimension was a flexible one, they contain the coordinates of reference points or positions. The fifth column contains an indication about the type of dimension, i.e. fix, variable or flexible, and the last column contains an indication of the associated creation key, i.e a key code.

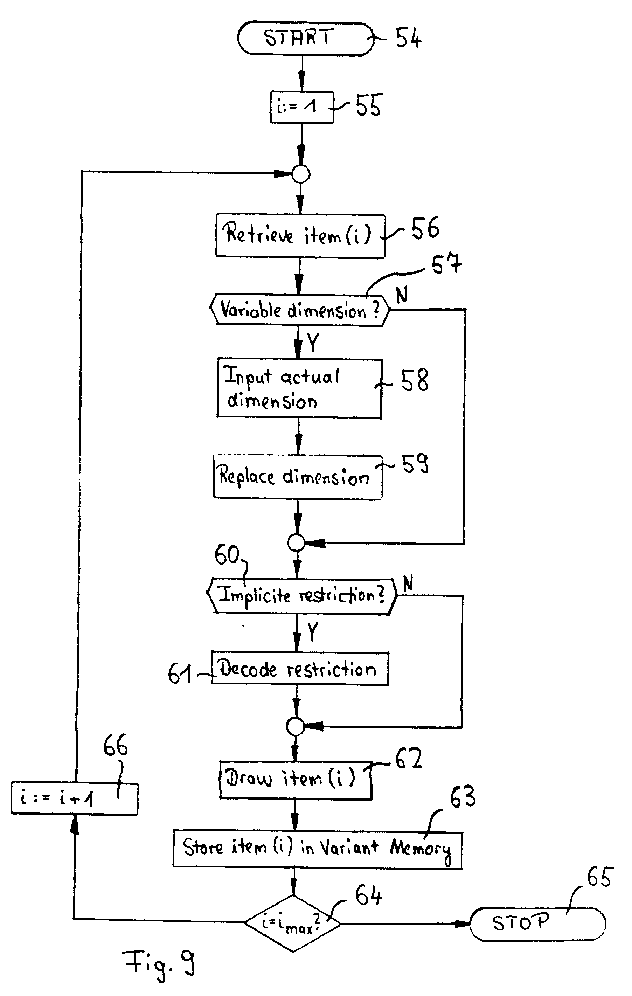

The second mode of the system, the so-called retrieval mode, will now be explained by means of the flowchart in Fig. 9. After passing "START" label 54, a counter i is set to 1 (55).

In the following loop, the item or object with the index or consecutive number i is removed from object memory 36 (56). If its dimension is a variable dimension (57), the actual dimension for the realization of a variant is entered (58) and replaces the variable dimension (59). This branch is skipped if the dimension of the referred item was not a variable dimension.

The system then checks whether item i implies an implicit restriction (60). This can be performed, for example, by checking the stored key code whether it implies a restriction and of what type this restriction is. In Fig. 5, a key-to-restriction table 40 contains a reference list of key codes and associated restrictions. Of course, it may also turn out that the actual key code does not imply a restriction.

Decoding of the restriction is indicated by reference numeral 61. When the restriction is decoded, item i may be drawn (62) on the display and stored for further processing in variant memory 39 (63).

Counter i is then compared with the maximum number iₘₐₓ of stored items (64). If this maximum is reached, the process stops (65); otherwise, the counter is incremented by 1 (66), and the next item is processed.

It is evident that the retrieval process, i.e. the generation of a variant, is indeed interactive and that the variant is completed when all inputs have been made. Therefore, the user has not to tolerate excessive response times. Further, all restrictions are processed reliably, and error messages can contain an indication on the geometrical item which caused the error, i.e. a missing dimension or restriction.

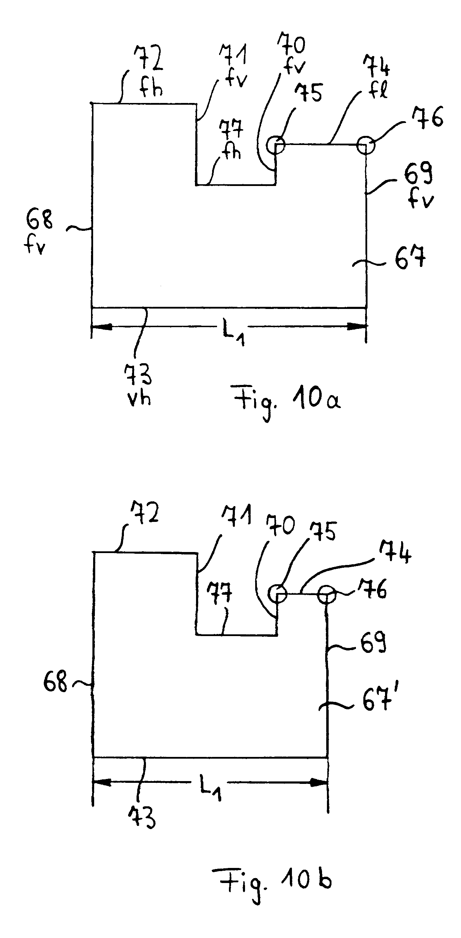

Fig. 10a depicts an example of the object entry process by means of a very simple mechanical part 67. The length and the coordinates of line 68 are entered as the vertical line with fix dimension (fv). The same applies to lines 69, 70 and 71. In similar manner, lines 72 and 77 are entered as horizontal lines with fix dimension (fh).

Line 73 is entered as a horizontal line with variable dimension (vh); the symbol for this dimension was selected as L₁. Line 74 (fl) is entered as a line from point-to-point (points 75 and 76), i.e is always adapted to close the contour.

Obviously, part 67 is the master for a family of parts with varying dimension L₁. Fig. 10b depicts a part 67' which was created in the retrieval process by simply shortening dimension L₁. Line 73 is appropriately shortened; the same applies to line 74 which was defined as being a connection between points 75 and 76.

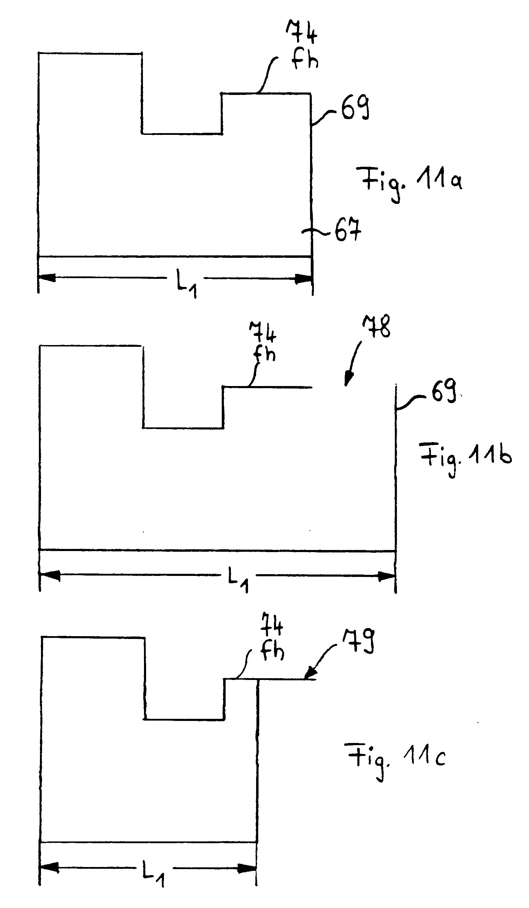

The present system is also suited to depict errors occuring during the generation of a variant and to indicate which geometric incompleteness caused the error. This will be demonstrated by means of Figs. 11a to 11c.

Fig. 11a depicts part 67. Now let us assume that line 74 was erroneously not defined as a line from point-to-point with flexible length (fl), but as horizontal line with fixed dimension (fh) instead. As soon as a length L₁ is entered in the retrieval process which is not identical to that of Fig. 11a, this will cause an error. In Fig. 11b, length L₁ was selected too long; this would result in a gap 78 between lines 74 and 69 (Fig. 11b). On the other band, if length L₁ is selected too short as depicted in Fig. 11c, this will result in an overhanging portion 79.

Of course, a system may generate further alphanumeric error messages if an error as depicted in Figs. 11a to 11c occurs.

## Claims

1. Method for generating graphical models of 2- or 3-dimensional objects with at least partially variable dimensions, in particular mechanical parts, in a computer aided design system comprising a set of design commands offered to the user for selection and preferably represented by command keys (27), said computer aided design system being designed for automatic detection of implicit geometric restrictions,
characterized in that said computer aided design system
(1.1) in an object entry mode,
(1.1.1) stores a design command, e.g. as a code, for further processing if entered by the user if said design command is a command of a predefined sub-group of said set of design commands, the design commands of said predefined sub-group being assigned to implicit geometric restrictions,
(1.2) in a retrieval mode wherein said variable dimensions are replaced by actual values,
(1.2.1) retrieves said design command, assigns a predefined implicit geometric restriction to it via a command-to-restriction table (40) and incorporates said implicit geometric restriction in the graphical model of an actual object.

2. Method for generating graphical models of 2- or 3-dimensional objects with at least partially variable dimensions, in particular mechanical parts, in a computer aided design system comprising a set of design commands offered to the user for selection and preferably represented by command keys (27), said computer aided design system being designed for automatic detection of implicit geometric restrictions,
characterized in that said computer aided design system
(2.1) in an object entry mode,
(2.1.1) reads a predefined implicit geometric restriction from a command-to-restriction table (40) if a command of a predefined sub-group of said set of design commands is entered by the user, the design commands of said predefined sub-group being assigned to implicit geometric restrictions,
(2.1.2) stores said predefined implicit geometric restriction or a representation of the same for further processing,
(2.2) in a retrieval mode wherein said variable dimensions are replaced by actual values,
(2.2.1) retrieves said implicit geometric restrictions and incorporates them in the graphical model of an actual object.

3. Method according to claim 1 or 2, characterized in that said predefined implicit geometric restriction is at least one of the following list:
- Horizontal line,
- Vertical line,
- Parallel line,
- Orthogonal line (Right angle),
- Tangential line,
- Colinear line,
- Concentric circle.

4. Method according to at least one of claims 1 to 3, characterized in that said computer aided design system
(4.1) in said object entry mode, records the sequence of design commands as entered by the user;
(4.2) in said retrieval mode, retrieves said sequence of design commands and incorporates them into the graphical model of the actual object in successive steps following said sequence.

5. Method according to at least one of the preceding claims, characterized in that in object entry mode, the user may enter the value of a geometrical dimension either as
(5.1) a fixed dimension which cannot be altered thereafter or
(5.2) a variable dimension which is then assigned an actual value in retrieval mode.

6. Method according to claim 5, characterized in that in object entry mode, the user may further enter the value of a geometrical dimension as
(6.1) a flexible dimension which is defined by two already defined geometrical positions.

7. Computer aided design system comprising
(7.1) at least one user input interface, preferably a keyboard and/or a graphics tablet (26);
(7.2) at least one user output interface, preferably a screen with graphics capabilities (31) and/or a plotter (32);
(7.3) a digital processor (24) being connected with said user input interface and said user output interface, preferably via appropriate registers (25,33), and further being connected with a program memory (29) containing instructions to operate said digital processor (24),
wherein said computer aided design system is set up for automatic detection of implicit geometric restrictions,
characterized in that
(7.4) said user input interface comprises a set of design command entry means, preferably keys (27) of said graphics tablet (26), which comprise at least two sub-groups,
(7.4.1) in the first of these sub-groups (27b) each design command being assigned - via a command-to-restriction table (40) - with a predefined implicit geometric restriction,
(7.5) said program memory (29) contains instructions
(7.5.1) to store the assigned implicit geometric restriction or a representation of the same for further processing if a design command of said first sub-group (27b) is entered,
(7.5.2) to retrieve said implicit geometric restrictions and incorporate them into the graphical model of an actual object.

8. Computer aided design system according to claim 7, characterized by a data memory (30) containing, as a representation of each design command, at least
(8.1) a representation of that command and/or its operation which is preferably also representative of an implicit geometric restriction eventually associated with that command, and
(8.2) the dimension of the associated geometrical item, preferably as a fixed dimension or as a variable or symbolic dimension.

9. Computer aided design system according to claim 7 or 8, characterized in that said program memory (29) contains instructions
(9.1) to store the sequence of design commands as entered by the user, preferably by storing the design commands in the same order as entered by the user or by assigning an index number to any design command, these indices indicating their input order,
(9.2) to retrieve the sequence of design commands and incorporate them into the graphical model of an actual object in the same order as entered by the user.

10. Computer aided design system according to at least one of claims 7 to 9, characterized in that said program memory (29) contains instructions enabling the user to enter, in an object entry mode, the value of a geometrical dimension either as
(10.1) a fixed dimension which cannot be altered thereafter or
(10.2) a variable dimension which is then assigned an actual value in a retrieval mode.

11. Computer aided design system according to claim 10, characterized in that said program memory (29) contains instructions further enabling the user to enter, in object entry mode, the value of a geometrical dimension as
(11.3) a flexible dimension which is defined by two already defined geometrical positions.

## Patentansprüche

1. Verfahren zur Generierung graphischer Modelle von 2 oder 3-dimensionalen Objekten mit mindestens teilweise variablen Maßen, insbesondere von mechanischen Teilen, in einem rechnergestützten Konstruktionssystem, welches eine Anzahl von Konstruktionskommandos beinhaltet, die dem Benutzer zur Auswahl stehen und vorzugsweise als Funktionstasten (27) ausgebildet sind,und das besagte rechnergestützte Konstruktionssystem zur automatischen Erkennung von impliziten geometrischen Restriktionen ausgelegt ist, dadurch gekennzeichnet, daß das besagte rechnergestützte Konstruktionssystem
(1.1) in einem Objekteingabemodus
(1.1.1) Konstruktionskommandos speichert, z.B. als Code, zur Weiterverarbeitung nach Eingabe durch den Benutzer, wenn das besagte Konstruktionskommando ein Kommando einer vordefinierten Untergruppe der besagten Anzahl von Konstruktionskommandos ist, wobei die Konstruktionskommandos der besagten vordefinierten Untergruppe impliziten geometrischen Restriktionen zugeordnet ist,
(1.2) in einem Abfragemodus, in welchem die besagten variablen Abmaße durch aktuelle Werte ersetzt werden,
(1.2.1) das besagte Konstruktionskommando zurückgewinnt, ihm eine vordefinierte implizite geometrische Restriktion über eine Befehl-zu-Restriktion-Zuordungstabelle (40) zuordnet und die besagte implizite geometrische Restriktion im graphischen Modell des aktuellen Objektes integriert.

2. Verfahren zur Generierung graphischer Modelle von 2 oder 3-dimensionalen Objekten mit mindestens teilweise variablen Maßen, insbesondere von mechanischen Teilen, in einem rechnergestützten Konstruktionssystem, welches aus einer Anzahl von Konstruktionskommandos beinhaltet, die dem Benutzer zur Auswahl stehen und vorzugsweise als Funktionstasten (27) ausgebildet sind und das besagte rechnergestützte Konstruktionssystem zur automatischen Erkennung von impliziten geometrischen Restriktionen ausgelegt ist,
dadurch gekennzeichnet, daß das besagte rechnergestützte Konstruktionssystem
(2.1) in einem Objekteingabemodus
(2.1.1) die vordefinierten impliziten geometrischen Restriktionen von einer Befehlzu-Restriktion-Zuordnungstabelle (40) liest, wenn ein Befehl einer vordefinierten Untergruppe der besagten Konstruktionsbefehle vom Benutzer eingegeben wird und die Konstruktionsbefehle der besagten vordefinierten Untergruppe impliziten geometrischen Restriktionen zugewiesen sind,
(2.1.2) die vordefinierte implizite geometrische Restriktion, oder eine Repräsentation von ihr, für die weitere Verarbeitung speichert,
(2.2) in einem Abfragemodus, in welchem die besagten variablen Abmaße durch aktuelle Werte ersetzt werden,
(2.2.1) die besagten impliziten geometrischen Restriktionen zurückgewinnt und in das graphische Modell eines aktuellen Objektes integriert.

3. Verfahren gemäß Anspruch 1 oder 2, dadurch gekennzeichnet, daß die besagte vordefinierte implizite geometrische Restriktion mindestens eine aus der folgenden Auflistung ist:
- horizontale Linie
- vertikale Linie,
- parallele Linie,
- orthogonale Linie (rechtwinklig),
- tangentiale Linie,
- koliniare Linie,
- konzentrischer Kreis.

4. Verfahren gemäß mindestens einem der Ansprüche 1 bis 3, dadurch gekennzeichnet, daß das besagte rechnergestützte Konstruktionssystem
(4.1) im besagten Objekteingabemodus die Sequenz der Konstruktionsbefehle, wie sie vom Benutzer eingegeben werden, aufzeichnet;
(4.2) im besagten Abfragemodus die besagte Sequenz von Konstruktionskommandos zurückgewinnt und diese in das graphische Modell des aktuellen Objektes in aufeinanderfolgenden Stufen, der besagten Sequenz folgend, integriert.

5. Verfahren gemäß mindestens einem der vorangegangenen Ansprüche, dadurch gekennzeichnet, daß im Objekteingabemodus der Benutzer den Wert des geometrischen Maßes eingeben kann, und zwar entweder als
(5.1) ein festes Maß, welches anschließend nicht mehr geändert werden kann, oder als
(5.2) ein variables Maß, welchem dann ein aktueller Wert im Abfragemodus zugewiesen wird.

6. Verfahren gemäß Anspruch 5, dadurch gekennzeichnet, daß in dem Objekteingabemodus der Benutzer als Weiteres den Wert eines geometrischen Maßes eingeben kann als
(6.1) ein flexibles Maß, welches durch zwei bereits definierte geometrische Positionen bestimmt ist.

7. Rechnergestütztes Konstruktionssystem welches
(7.1) mindestens eine Benutzereingabeschnittstelle, vorzugsweise eine Tastatur und/oder ein Graphiktablett (26);
(7.2) mindestens eine Benutzerausgabeschnittstelle, vorzugsweise ein graphikfähiger Bildschirm (31) und/oder ein Zeichenmaschine (32);
(7.3) einen digitalen Prozessor (24), der mit besagter Benutzereingabeschnittstelle und besagter Benutzerausgabeschnittstelle vorzugsweise über entsprechende Register (25, 33) verbunden ist und außerdem mit einem Programmspeicher (29) verbunden ist, welcher die Instruktionen zum Betrieb des besagten digitalen Prozessors (24) beinhaltet,
wobei das besagte rechnergestützte Konstruktionssystem zum automatischen Erkennen von impliziten geometrischen Restriktionen ausgelegt ist,
und dadurch gekennzeichnet ist, daß
(7.4) die besagte Benutzereingabeschnittstelle eine Anzahl von Befehlseingabevorrichtungen umfaßt, vorzugsweise Tasten (27) des besagten Graphiktabletts (26), welche mindestens zwei Untergruppen umfassen, wobei
(7.4.1) in der ersten dieser Untergruppen (27b) jeder Konstruktionsbefehl über eine Befehl-zu-Restriktion-Zuordungstabelle (40) einer vordefinierten impliziten geometrischen Restriktion zugeordnet ist,
(7.5) der besagte Programmspeicher (29) Instruktionen enthält,
(7.5.1) um die zugeordnete implizite geometrische Restriktion, oder einer Repräsentation von ihr, speichert, zur Weiterverarbeitung nach Eingabe eines Konstruktionsbefehls der besagten ersten Untergruppe (27b),
(7.5.2) um die besagten impliziten geometrischen Restriktionen zurückzugewinnen und sie in das graphische Modell eines aktuellen Objektes zu integrieren.

8. Rechnergestütztes Konstruktionssystem gemäß Anspruch 7, gekennzeichnet durch einen Datenspeicher (30) der als Repräsentation eines jeden Konstruktionsbefehls mindestens
(8.1) eine Repräsentation dieses Befehls und/oder seine Durchführung, was vorzugsweise ebenfalls repräsentativ für eine implizite geometrische Restriktion ist, die schließlich mit dem Befehl assoziiert ist, und
(8.2) das Maß des assoziierten geometrischen Elementes, vorzugsweise als festes Maß oder variables oder symbolisches Maß,
beinhaltet.

9. Rechnergestütztes Konstruktionssystem gemäß einem der Ansprüche 7 oder 8, dadurch gekennzeichnet, daß der besagte Programmspeicher (29) Instruktionen beinhaltet um
(9.1) die Sequenz der Konstruktionskommandos, wie vom Benutzer eingegeben, zu speichern, vorzugsweise durch Speicherung der Konstruktionsbefehle in der vom Benutzer eingegebenen Reihenfolge oder durch Zuweisung einer Indexzahl zu jedem Konstruktionsbefehl, wobei die Indizes die Eingabereihenfolge angeben,
(9.2) die Sequenz der Konstruktionsbefehle zurückzugewinnen und sie in das graphische Modell des aktuellen Objektes entsprechend der vom Benutzer eingegebenen Reihenfolge zu integrieren.

10. Rechnergestütztes Konstruktionssystem gemäß mindestens einer der Ansprüche 7-9, dadurch gekennzeichnet, daß der besagte Programmspeicher (29) Instruktionen beinhaltet, welche den Benutzer ermächtigen, im Objekteingabemodus den Wert eines geometrischen Maßes entweder als
(10.1) festes Maß, das anschließend nicht mehr änderbar ist oder
(10.2) einem variablen Maß, welchem dann ein aktueller Wert im Abfragemodus zugewiesen wird,
einzugeben.

11. Rechnergestütztes Konstruktionssystem gemäß Anspruch 10, dadurch gekennzeichnet, daß der besagte Programmspeicher (29) Instruktionen beinhaltet, die dem Benutzer im Objekteingabemodus die Eingabe des Wertes eines geometrischen Maßes als
(11.3) flexibles Maß, welches durch zwei bereits definierte geometrische Positionen definiert ist,
ermöglicht.

## Revendications

1. Procédé pour générer des modèles graphiques d'objets à 2 ou 3 dimensions présentant des dimensions au moins partiellement variables, comme en particulier des pièces mécaniques, dans un système de conception assistée par ordinateur comprenant un ensemble de commandes de conception offertes à l'utilisateur pour une sélection et représentées de préférence par des touches de commande (27), ce système de conception assistée par ordinateur étant conçu pour une détection automatique de limitations géométriques implicites,
caractérisé en ce que le système de conception assistée par ordinateur
(1.1) dans un mode d'enregistrement d'objet,
(1.1.1) stocke une commande de conception, par exemple sous la forme d'un code, pour un traitement ultérieur si elle est enregistrée par l'utilisateur et si cette commande de conception fait partie d'un sous-groupe pré-défini de l'ensemble de commandes de conception, les commandes de conception de ce sous-groupe pré-défini étant affectées à des limitations géométriques implicites,
(1.2) dans un mode de restitution dans lequel les dimensions variables sont remplacées par des valeurs réelles,
(1.2.1) retrouve la commande de conception, affecte une limitation géométrique implicite pré-définie à celle-ci par l'intermédiaire d'une table de commande/limitation (40) et incorpore cette limitation géométrique implicite dans le modèle graphique d'un objet réel.

2. Procédé pour générer des modèles graphiques d'objets à deux ou trois dimensions présentant des dimensions au moins partiellement variables, comme en particulier des pièces mécaniques, dans un système de conception assistée par ordinateur comprenant un ensemble de commandes de conception offertes à l'utilisateur pour une sélection et représentées de préférence par des touches de commande (27), ce système de conception assistée par ordinateur étant conçu pour une détection automatique de limitations géométriques implicites,
caractérisé en ce que le système de conception assistée par ordinateur
(2.1.) dans un mode d'enregistrement d'objet,
(2.1.1) lit une limitation géométrique implicite pré-définie dans une table de commande/limitation (40) si une commande d'un sous-groupe pré-défini de l'ensemble de commandes de conception est enregistré par l'utilisateur, les commandes de conception de ce sous-groupe pré-défini étant affectées aux limitations géométriques implicites,
(2.1.2) stocke la limitation géométrique implicite pré-définie ou une représentation de celle-ci pour un traitement ultérieur,
(2.2) dans un mode de restitution dans lequel les dimensions variables sont remplacées par des valeurs réelles,
(2.2.1) retrouve les limitations géométriques implicites et les incorpore dans le modèle graphique d'un objet réel.

3. Procédé selon une quelconque des revendications 1 et 2, caractérisé en ce que la limitation géométrique implicite pré-définie est l'une au moins des limitations de la liste suivante :
- ligne horizontale,
- ligne verticale,
- ligne parallèle,
- ligne orthogonale (angle droit),
- ligne tangentielle,
- ligne colinéaire,
- cercle concentrique.

4. Procédé selon l'une au moins des revendications 1 à 3, caractérisé en ce que le système de conception assistée par ordinateur
(4.1) dans le mode d'enregistrement d'objet, enregistre la séquence de commandes de conception telles qu'elles sont introduites par l'utilisateur ;
(4.2) dans le mode de restitution, retrouve cette séquence de commandes de conception et les incorpore dans le modèle graphique de l'objet réel par étapes successives suivant cette séquence.

5. Procédé selon l'une au moins des revendications précédentes, caractérisé en ce que dans le mode d'enregistrement d'objet, l'utilisateur peut introduire la valeur d'une dimension géométrique sous la forme
(5.1) soit d'une dimension fixe qui ne peut être modifiée ensuite,
(5.2) soit d'une dimension variable à laquelle on affecte ensuite une valeur réelle dans le mode de restitution.

6. Procédé selon la revendication 5, caractérisé en ce que, dans le mode d'enregistrement d'objet, l'utilisateur peut en outre introduire la valeur d'une dimension géométrique sous la forme
(6.1) d'une dimension flexible définie par deux positions géométriques déjà définies.

7. Système de conception assistée par ordinateur, comprenant :
(7.1) au moins une interface d'entrée d'utilisateur, de préférence sous la forme d'un clavier et/ou d'une tablette de graphiques (26) ;
(7.2) au moins une interface de sortie d'utilisateur, de préférence sous la forme d'un écran à capacités graphiques (31) et/ou d'une table traçante (32) ;
(7.3) un processeur numérique (24) branché à l'interface d'entrée d'utilisateur et à l'interface de sortie d'utilisateur, de préférence par l'intermédiaire de registres appropriés (25, 33), et branché en outre à une mémoire de programmes (29) contenant des instructions pour faire fonctionner le processeur numérique (24),
dans lequel le système de conception assistée par ordinateur est agencé pour une détection automatique de limitations géométriques implicites, caractérisé en ce que
(7.4) l'interface d'entrée d'utilisateur comprend un ensemble de moyens d'entrée de commandes de conception, de préférence sous la forme de touches (27) de la tablette de graphiques (26), comprenant au moins deux sous-groupes,
(7.4.1) dans le premier de ces sous-groupes (27b) chaque commande de conception étant affectée - par l'intermédiaire d'une table de commande/limitation (40) - à une limitation géométrique implicite,
(7.5) la mémoire de programmes (29) contient des instructions
(7.5.1) pour stocker la limitation géométrique implicite affectée ou une représentation de celle-ci pour un traitement ultérieur si une commande de conception de ce premier sous-groupe (27b) est introduite,
(7.5.2) pour retrouver ces limitations géométriques implicites et les incorporer dans le modèle graphique d'un objet réel.

8. Système de conception assistée par ordinateur selon la revendication 7, caractérisé par une mémoire de données (30) contenant, comme représentation de chaque commande de conception, au moins
(8.1) une représentation de cette commande et/ou de son fonctionnement qui représente de préférence également une limitation géométrique implicite éventuellement associée à cette commande, et
(8.2) la dimension de l'objet géométrique associé, de préférence sous la forme d'une dimension fixe ou d'une dimension variable ou symbolique.

9. Système de conception assistée par ordinateur selon l'une quelconque des revendications 7 et 8, caractérisé en ce que la mémoire de programmes (29) contient des instructions
(9.1) pour stocker la séquence de commandes de conception telle qu'elle est introduite par l'utilisateur, de préférence en stockant les commandes de conception dans le même ordre que leur ordre d'introduction par l'utilisateur, ou en affectant un numéro d'indice à chaque commande de conception, ces indices indiquant leur ordre d'entrée,
(9.2) pour retrouver la séquence de commandes de conception et les incorporer dans le modèle graphique d'un objet réel, dans le même ordre que leur ordre d'introduction par l'utilisateur.

10. Système de conception assistée par ordinateur selon l'une au moins des revendications 7 à 9, caractérisé en ce que la mémoire de programmes (29) contient des instructions permettant à l'utilisateur d'introduire, dans un mode d'enregistrement d'objet, la valeur d'une dimension géométrique sous la forme
(10.1) Soit d'une dimension fixe qui ne peut être modifiée ensuite,
(10.2) Soit d'une dimension variable à laquelle on affecte ensuite une valeur réelle dans un mode de restitution.

11. Système de conception assistée par ordinateur selon la revendication 10, caractérisé en ce que la mémoire de programmes (29) contient des instructions permettant en outre à l'utilisateur d'introduire, dans le mode d'enregistrement d'objet, la valeur d'une dimension géométrique sous la forme
(11.3) d'une dimension flexible définie par deux positions géométriques déjà définies.
